(19) Europäisches Patentamt
European Patent Office
Office européen des brevets

(11) **EP 1 871 113 A1**

(12) **EUROPEAN PATENT APPLICATION**

(43) Date of publication:
    **26.12.2007 Bulletin 2007/52**

(51) Int Cl.:
    **H04N 7/26** (2006.01)

(21) Application number: **06291041.9**

(22) Date of filing: **20.06.2006**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(71) Applicant: **Thomson Licensing**<br>**92100 Boulogne-Billancourt (FR)**<br><br>(72) Inventors:<br>• **Ying, Chen**<br>**Beijing 100083 (CN)** | • **Yuwen, Wu**<br>**Beijing 100031 (CN)**<br>• **Yongying, Gao**<br>**Beijing 100101 (CN)**<br><br>(74) Representative: **Hartnack, Wolfgang et al**<br>**Deutsche Thomson-Brandt GmbH**<br>**European Patent Operations**<br>**Karl-Wiechert-Allee 74**<br>**30625 Hannover (DE)** |

(54) **Method and apparatus for encoding video enhancement layer with multiresolution color scalability**

(57)  A method for encoding input video data comprising color information comprises encoding color information of the input video data at a first color resolution, wherein first color information data are generated and inserting the first color information data into a base-layer data stream, reconstructing the color information from the BL data stream, generating a color enhancement signal from the difference between the color information of the input data and the reconstructed color information from the base-layer data stream, encoding the color enhancement signal, and inserting the encoded color enhancement signal into the enhancement layer data stream.

Fig.1

Printed by Jouve, 75001 PARIS (FR)

EP 1 871 113 A1

**Description**

Field of the invention

This invention relates to a method and a apparatus for encoding color information in video signals, and a method and an apparatus for decoding color information in video signals.

Background

Current video authoring tools or DVD players focus on H.264/AVC, especially H.264 main profile and high profile 4:2:0 and high profile 4:4:4.
JVT also gives standards for high bit-depth encoding, which are defined in H.264 main profile and for which the bit-depth is up to 12. Although 4:2:2 and 4:4:4 chroma formats were supported by H.264 high profile, a new 4:4:4 profile is adopted by JVT and shows higher coding efficiency.
However, none of the existing high bit coding methods gives any scalable solution. Assuming a scenario with two different decoders, or clients with different requests for the color bit-depth, e.g. 12 bit, for just one raw video, today's solution encodes the 12-bit raw video to get a first bit-stream, and then makes a separate second bit stream for 8-bit raw video. If it should be delivered to different clients, it has to be delivered twice, e.g. both bit-streams have to be put on one disk. This is of low efficiency regarding both the compression ratio and the operational complexity. A high bit solution is highly desirable e.g. for professional studio or home theatre related applications.

Summary of the Invention

The proposed solution is to encode the whole 12-bit raw video once to get a bit-stream that has base-layer (BL) and an enhancement-layer (EL). Preferably, the BL is compatible with any lower bit color encoding standard, for example the H.264/AVC standard. Thus, color space scalability is provided. One advantage of the invention is that the overhead of the whole scalable bit-stream compared to the conventional 12-bit data stream is very low.
According to one aspect of the invention, a method for encoding input video data comprising color information, wherein a self-contained BL data stream and at least one EL data stream are generated, comprises the steps of encoding color information of the input video data at a first color resolution (corresponding to a first number of possible different colors), wherein first color information data are generated,
inserting the first color information data into the BL data stream,
encoding the BL data stream, decoding the encoded BL data stream again,
reconstructing the color information from the decoded BL data stream,
generating a color enhancement signal from the difference between the color information of the input data and the reconstructed color information from the BL data stream, encoding the color enhancement signal, and
inserting the encoded color enhancement signal into the EL data stream.
Correspondingly, a video signal according to the invention comprises a self-contained BL data stream and at least one EL data stream, wherein the BL data stream comprises first color information encoded at a first color resolution corresponding to a first number of possible different colors, and the EL data stream comprises differential color enhancement information representing the difference between the first color information and a higher second color resolution corresponding to a second number of possible different colors.
According to another aspect of the invention, a method for decoding video data, the video data comprising a self-contained BL data stream and at least one EL data stream, comprises the steps of
decoding the BL data stream and the EL data stream, reconstructing the color information of the decoded BL data stream, extracting differential color information from the decoded EL data stream, and enhancing the reconstructed color information of the decoded BL data stream with the extracted differential color information from the decoded EL data stream.
The enhancing of color bit-depth of a BL by residual values from an EL is called color space scalability herein. In one embodiment, it is decided for whole pictures or slices whether color space scalability is used. In another embodiment, this decision is taken for every macroblock (MB). During encoding, an indication is inserted into the respective layer to indicate that color space scalability is used.
Advantageous embodiments of the invention are disclosed in the dependent claims, the following description and the figures.

Brief description of the drawings

Exemplary embodiments of the invention are described with reference to the accompanying drawings, which show in

Fig.1 the structure of color bit-depth scalable encoder and decoder;
Fig.2 decoding of color bit-depth scalable data streams;
Fig.3 details of the encoding and decoding processes; and
Fig.4 intra coding of color bit-depth scalability.

Detailed description of the invention

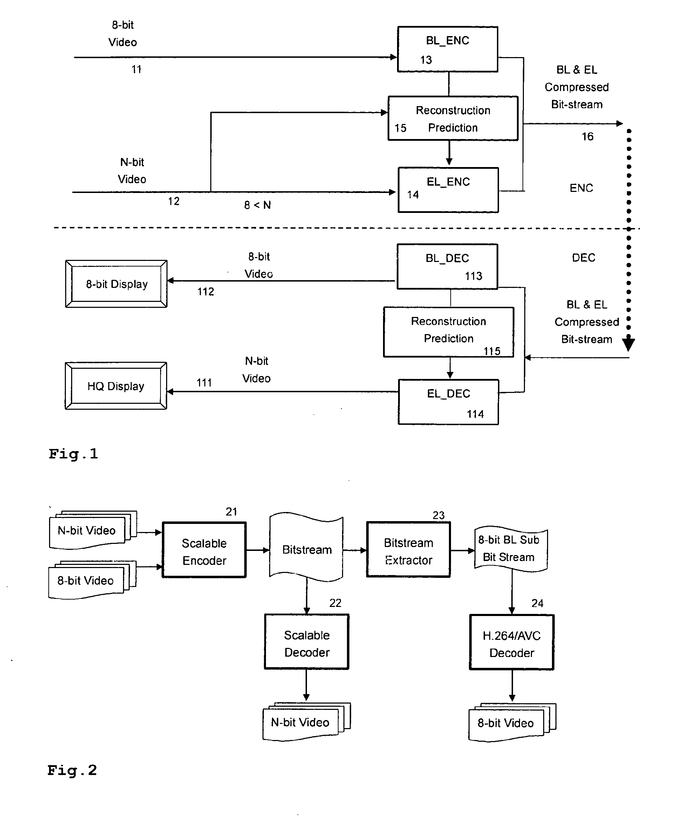

As shown in Fig.1, two videos are used as input of the video codec: N-bit raw video and M-bit (M < N, usually M=8) video. The M-bit video can be either decomposed from the N-bit raw video or be given by other ways. The scalable solution can reduce the redundancy between two layers by using the reconstructed pictures of the BL. The two video streams, one with 8-bit color and the other with N-bit color (N>8), are input to the system, and the output is the scalable bit-stream. In one embodiment however only one N-bit color data stream is input, from which an M-bit (M<N) color data stream is generated for the BL. The M-bit video is encoded as the BL using the included H.264/AVC encoder. Meanwhile the information of the BL can be used to improve the coding efficiency of the EL. This is called *inter-layer prediction herein.* Each picture - a group of MBs - has two access units, one for the BL and the other one for the EL. The coded bit-streams are multiplexed to form a scalable bit-stream. The BL encoder comprises e.g. an H.264/AVC encoder, and the reconstruction is used to predict the N-bit color video, which will be used for the EL encoding.

As shown in Fig 1, the scalable bit-stream exemplarily contains an AVC compliant BL bit-stream, which can be decoded by a BL decoder (conventional AVC decoder). Then the same prediction as in the encoder will be done at the decoder side (after evaluation of the respective indication) to get the predicted N-bit video. With the N-bit predicted video, the EL encoder will then basically use the N-bit prediction to generate the finally N-bit video for a High Quality (HQ) display.

The present invention focuses on high-bit EL coding, which utilizes the BL reconstruction as a predictor of the EL. This is called inter-layer prediction, and may be performed on picture level or on macroblock level.

In the picture level color bit-depth scalable system we have a scalable encoder, scalable decoder and a bit-stream extractor to provide the whole scalability, as shown in Fig.2.

The scalable encoder 21 has a BL input 11 and an EL input 12. At the BL input, it receives an 8-bit sequence, while on its EL input it receives an N-bit sequence (N=10,12,16 exemplarily). At its output 16 it provides a scalable bit-stream, which comprises multiplexed BL network-adaptation layer (NAL) units and EL NAL units. BL 8-bit frames and enhancement (N-bit) frames are coded alternately. The input sequences of 8-bit and N-bit have the same chroma sampling format. For example, they should be both 4:2:0, 4:2:2 or 4:4:4.

On the receiver side, a bit-stream extractor 23 may extract the BL bit-stream. The extracted BL bit-stream can then be decoded by a conventional H.264/AVC decoder 24, which generates an 8-bit video if the input is a H.264/AVC compliant bit-stream. But the received bit-stream may also be decoded by a scalable decoder 22, which uses both BL and EL data streams. The scalable decoder 22 generates an N-bit color depth video if the input is the whole scalable bit-stream.

During the decoding process, the BL decoder will just use the BL bit-stream which is extracted from the whole bit-stream, to provide a M-bit (e.g. 8-bit) reconstruction video. With the whole stream, N-bit high color depth video can be reconstructed.

In one embodiment, the proposed approach is based on MB level inter-layer prediction. Hence, the BL information can be handled block by block to give predictions for the EL.

Since the EL and the BL have the same resolution, the corresponding MB or block pairs at the EL or BL have the same horizontal or vertical coordinates.

In the Intra Coding mode, direct intra coding for high bit-depth will be enabled. Intra_BLD mode is introduced.

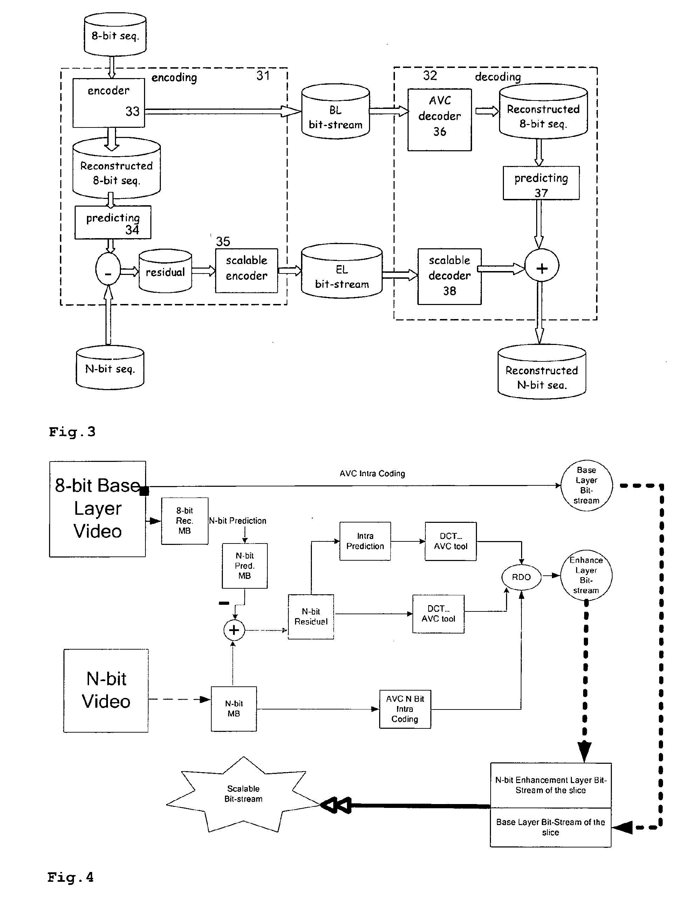

Direct Intra Mode will be used for high bit (N-bit as shown in Fig.4) encoding, which is defined in the H.264 high profile. It can be supported at the EL encoder and decoder.

As shown in Fig.4, the BL reconstructed MB will be used to generate an N-bit prediction MB for the N-bit EL encoding. For Intra_BLD mode, the reconstructed data as a prediction of the enhancement layer(What does it mean?). We name the difference between the N-bit prediction MB and the original N-bit MB as N-bit Residual. For each MB, one flag Intra_Pre_Flag will be written to decide whether the current MB will be use in the intra prediction or not.
If Intra_Pre_Flag is true, the AVC Intra Prediction will be done for the N-bit Residual and the prediction error will be DCT transformed and coded as what have been done in AVC high profile.
If Intra_Pre_Flag is false, the N-bit Residual will be directly DCT transformed and coded as what have been done in AVC high profile.
Default value of Intra_Pre_Flag will be false.
The Intra Coding here means coding of Intra Slice as well as Intra MBs.

RDO (Rate Distortion Optimization) will be done among all the modes and the optimal mode will be chosen. During the RDO process, the λ will be adjusted for the N-bit EL.

Inter Coding

For Inter P and B pictures, MBs can be coded as Inter MBs. Firstly all the methods for Intra Coding should be supported. Besides, other modes will be supported:

    1. N-bit EL encoding will support direct N-bit Inter Coding.
    2. N-bit Residual of the EL can use Intra_BLD mode for coding.
    3. Inter_BLD mode. Motion compensation can be processed at the N-bit Residual pictures and then the Residual between the N-bit Residuals will be directly DCT encoded. The BL motion field will be directly reused.

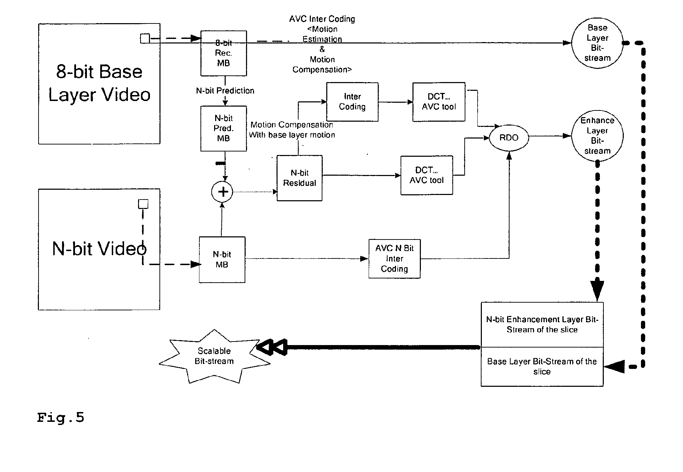

As shown in Fig.5, the BL Inter MBs will be reconstructed to generate an N-bit prediction for the EL encoding. This method is called Inter_BLD mode.

RDO (Rate Distortion Optimization) will be done among all the modes and the optimal mode will be chosen. During the RDO process, the lamda λ will be adjusted for the N-bit EL. The Inter coding RDO result will also be compared with intra coding to decide the final mode of the current MB.

In the following, inter-layer prediction is described. As shown in Fig.3, the encoder will code the residual between the BL reconstruction prediction and the original N-bit video, and the decoder can multiplex the residual with the BL reconstruction prediction to generate an N-bit reconstructed video. The BL is coded by H.264 main or high profile 4:2: 0 or H.264 high 4:4:4 profile. Then it will be reconstructed to predict the high N-bit video.

There are various possible solutions to generate the predicted N-bit video. Preferably, direct bit shift is used to realize the prediction:

$$V_p = V_b \ 2^{N-8} + 2^{N-9},$$

where $V_b$ is a sample of the BL reconstruction picture and $V_p$ is the corresponding sample of the predicted N-bit video. and if $V_e$ is a sample of the reconstructed EL and $V_r$ is the residual value then

$$V_e = V_p + V_r$$

For example, if the 12-bit value is 1101_0100_0110, then the BL value is 1101_0100 and the residual is 1110:

| | | |
|---|---|---|
| $V_b$ = | 1101_0100 | (BL value) |
| $V_p$ = | 1101_0100_1000 | (prediction/reconstruction) |
| $V_d$ = | 1101_0100_0110 - 1101_0100_1000 = 1110 (residual) | |
| $V_d$ | will be encoded, and when it is reconstructed it is $V_r$. | |

The purpose of adding $2^{N-9}$ is to use the median value, rather than the minimum or maximum value between $V_b * 2^{N-8}$ and $(V_b+1) *_2{}^{N-8}$.
In general, high color bit-depth uses N bits and standard color bit-depth uses M bits (M<N). The prediction / reconstruction value then has N bits, and the difference value (i.e. the residual) has N-M bits.

As shown in Fig.3, the residual between the N-bit prediction and the N-bit original sequence is encoded by the scalable encoder.

The present invention provides two kinds of low complexity EL coding mechanisms on picture level. The prediction from the BL can be based on simple bit shift from 8-bit video to N-bit video, and then the residual between the prediction
and the high bit video can be coded by two mechanisms to generate the EL bit-stream.

First, when coding the EL, the residual will be added an offset of $2^{N-1}$ and clipped to the range of $[0,2^N-1]$, and the N-bit video will be directly INTRA coded by using H.264 high profile. A simple extension is provided based on the existing H.264 profiles, where the encoder supports any chroma format (4:2:0,4:2:2 and 4:4:4) with any bit-depth from 10 to 16. In principle however, any color bit-depth is possible.

Second, when coding the EL, the residual will be directly DCT coded and then entropy coded just as for the motion compensation residual coding of Inter-coded pictures.

The first mechanism is to offset the residual to an N-bit video with samples in $[0,2^N-1]$ by pulsing $2^{N-1}$ and clipping. Then the generated N-bit video will be INTRA coded. The second mechanism is to directly code the residual between prediction and N-bit video.

The EL bit-stream NAL packets for coded pictures use a different group of values compared to the NAL values of the H.264/AVC NAL packets for coded pictures, so that they can be separated.

Picture level prediction will be less efficient than MB level prediction. However, if picture level prediction gives good performance, it is also very interesting since it has low complexity, which is advantageous for high resolution, high frame rate and even high bit-depth related software or hardware design.

This invention relates to a new kind of scalability: color bit-depth scalability. This scalable solution provides an H.264/AVC compatible 8-bit BL and EL(s) to support higher bit (e.g. 10,12 or 16) displays.

The invention is particularly advantageous for video encoders and decoders.

**Claims**

1. A method for encoding input video data comprising color information, wherein a self-contained base-layer data stream and at least one enhancement-layer data stream are generated, the method comprising the steps of

   - encoding color information of the input video data at a first color resolution corresponding to a first number of possible different colors, wherein first color information data are generated;
   - inserting the first color information data into the base-layer data stream;
   - encoding the base-layer data stream;
   - decoding the encoded base-layer data stream;
   - reconstructing the color information from the decoded base-layer data stream;
   - generating a color enhancement signal from the difference between the color information of the input data and the reconstructed color information from the base-layer data stream;
   - encoding the color enhancement signal; and
   - inserting the encoded color enhancement signal into the enhancement-layer data stream.

2. Method according to claim 1, wherein the step of encoding the base-layer data stream comprises DCT transforming and quantizing the color data, and the step of decoding the encoded base-layer data stream comprises inverse DCT transforming and inverse quantizing.

3. Method according to claim 1 or 2, wherein the base-layer and the enhancement-layer have the same spatial and/or temporal resolution.

4. Method according to any of claims 1-3, wherein the color information of the input video signal is N bit wide, the first color information is M bit wide with M < N, and the color information of the base-layer represents the M most significant bits of the color information of the input video signal.

5. Method according to any of claims 1-4, further comprising the step of selecting an encoding mode on macroblock level, wherein for each macroblock an indication is inserted in the enhancement-layer data stream for indicating whether the color values of the macroblock are differential values.

6. Method according to any of claims 1-5, wherein the step of generating the color enhancement signal comprises the substeps of

   - shifting the color residual value by (N-1) digits and adding $2^{N-1}$;
   - clipping the shifted color residual to $[0,2^{(N-1)}]$ for high bit video;
   - encoding the shifted color residual value; and
   - directly coding the color residual starting from the DCT transformation, wherein tools of the AVC standard or advanced AVC standard are used.

7. Video signal comprising a self-contained base-layer data stream and at least one enhancement-layer data stream, wherein

- the base-layer data stream comprises first color information encoded at a first color resolution corresponding to a first number of possible different colors, and

- the enhancement-layer data stream comprises differential color enhancement information representing the difference between the first color information and a higher second color resolution corresponding to a second number of possible different colors.

8. Method for decoding video data, the video data comprising a self-contained base-layer data stream and at least one enhancement-layer data stream, comprising the steps of

- decoding the base-layer data stream and the enhancement-layer data stream;
- reconstructing the color information of the decoded base-layer data stream;
- extracting differential color information from the decoded enhancement-layer data stream; and
- enhancing the reconstructed color information of the decoded base-layer data stream with the extracted differential color information from the decoded enhancement-layer data stream.

9. Method according to claim 8, wherein the step of enhancing the reconstructed color information of the decoded base-layer data stream comprises the steps of

- shifting the color value by (N-M) digits, wherein a first value is obtained;
- extracting from the enhancement-layer data stream a color residual value having M bits;
- adding to the first value the extracted color residual value, wherein a second value is obtained; and
- adding to the first or second value $2^{N-M-1}$, wherein an exclusive-or operation on one digit is performed.

10. Apparatus for encoding input video data comprising color information, wherein a self-contained base-layer data stream and at least one enhancement-layer data stream are generated, the apparatus comprising

- means for encoding color information of the input video data at a first color resolution corresponding to a first number of possible different colors, wherein first color information data are generated;
- means for inserting the first color information data into the base-layer data stream;
- means for encoding the base-layer data stream;
- means for decoding the encoded base-layer data stream;
- means for reconstructing the color information from the decoded base-layer data stream;
- means for generating a color enhancement signal from the difference between the color information of the input data and the reconstructed color information from the base-layer data stream;
- means for encoding the color enhancement signal; and
- means for inserting the encoded color enhancement signal into the enhancement-layer data stream.

11. Apparatus for decoding video data, the video data comprising a self-contained base-layer data stream and at least one enhancement-layer data stream, comprising the steps of

- means for decoding the base-layer data stream and the enhancement-layer data stream;
- means for reconstructing the color information of the decoded base-layer data stream;
- means for extracting differential color information from the decoded enhancement-layer data stream; and
- means for enhancing the reconstructed color information of the decoded base-layer data stream with the extracted differential color information from the decoded enhancement-layer data stream.

Fig.1

Fig.2

Fig.3

Fig.4

Fig.5

| | European Patent Office | **EUROPEAN SEARCH REPORT** | Application Number EP 06 29 1041 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 1 699 243 A (SAMSUNG ELECTRONICS CO LTD [KR]) 6 September 2006 (2006-09-06) * abstract * * paragraphs [0007], [0014], [0044], [0045], [0053] * * figures 4,8 * | 1-11 | INV. H04N7/26 |
| X | PEARLMAN W A ET AL: "Embedded Video Subband Coding with 3D Spiht" 1998, WAVELET IMAGE AND VIDEO COMPRESSION, XX, XX, PAGE(S) 397-432 , XP002193121 * abstract * * page 407, paragraph 4.2 * | 1-11 | |
| Y | CHEE Y-K: "SURVEY OF PROGRESSIVE IMAGE TRANSMISSION METHODS" INTERNATIONAL JOURNAL OF IMAGING SYSTEMS AND TECHNOLOGY, WILEY AND SONS, NEW YORK, US, vol. 10, no. 1, 1999, pages 3-19, XP000805935 ISSN: 0899-9457 * abstract * | 1-11 | |
| X | WO 02/47396 A (DIGITAL PUBLISHING JAPAN CO LT [JP]; SHINDO JIRO [JP]) 13 June 2002 (2002-06-13) * abstract * * figures 19,20 * | 1-11 | TECHNICAL FIELDS SEARCHED (IPC) H04N |
| Y | US 2002/118743 A1 (JIANG HONG [US]) 29 August 2002 (2002-08-29) * abstract * * paragraphs [0006], [0050]; figure 5 * | 1-11 | |
| | -/-- | | |

The present search report has been drawn up for all claims

| Place of search | Date of completion of the search | Examiner |
|---|---|---|
| Munich | 4 January 2007 | Glasser, Jean-Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 06 29 1041

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LECHAT P ET AL: "SCALABLE IMAGE CODING WITH FINE GRANULARITY BASED ON HIERARCHICAL MESH" PROCEEDINGS OF THE SPIE, SPIE, BELLINGHAM, VA, US, vol. 3653, no. 3653, pt1-2, January 1999 (1999-01), pages 1130-1142, XP000862993 ISSN: 0277-786X * abstract * | 1-11 | |
| A | SHUFELT J A: "Texture Analysis for Enhanced Color Image Quantization" CVGIP GRAPHICAL MODELS AND IMAGE PROCESSING, ACADEMIC PRESS, DULUTH, MA, US, vol. 59, no. 3, May 1997 (1997-05), pages 149-163, XP004418935 ISSN: 1077-3169 * abstract * | 1-11 | |
| A | SOCHEN N ET AL: "Resolution enhancement of colored images by inverse diffusion processes" ACOUSTICS, SPEECH AND SIGNAL PROCESSING, 1998. PROCEEDINGS OF THE 1998 IEEE INTERNATIONAL CONFERENCE ON SEATTLE, WA, USA 12-15 MAY 1998, NEW YORK, NY, USA,IEEE, US, vol. 5, 12 May 1998 (1998-05-12), pages 2853-2856, XP010279372 ISBN: 0-7803-4428-6 * abstract * | 1-11 | TECHNICAL FIELDS SEARCHED (IPC) |

The present search report has been drawn up for all claims

| Place of search | Date of completion of the search | Examiner |
|---|---|---|
| Munich | 4 January 2007 | Glasser, Jean-Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 29 1041

This annex lists the patent family members relating to the patent documents cited in the above-mentioned European search report.
The members are as contained in the European Patent Office EDP file on
The European Patent Office is in no way liable for these particulars which are merely given for the purpose of information.

04-01-2007

| Patent document cited in search report | | Publication date | Patent family member(s) | | Publication date |
|---|---|---|---|---|---|
| EP 1699243 | A | 06-09-2006 | AU 2006200634 A1<br>CA 2537379 A1<br>JP 2006246473 A<br>WO 2006093383 A1<br>MX PA06002154 A | | 21-09-2006<br>04-09-2006<br>14-09-2006<br>08-09-2006<br>22-09-2006 |
| WO 0247396 | A | 13-06-2002 | NONE | | |
| US 2002118743 | A1 | 29-08-2002 | NONE | | |

EPO FORM P0459

For more details about this annex : see Official Journal of the European Patent Office, No. 12/82